# EUROPEAN PATENT SPECIFICATION

(11) **EP 4 495 874 B1**
(45) Date of publication and mention of the grant of the patent: **09.12.2026**
(21) Application number: 23769918.6
(22) Date of filing: 17.03.2023
(51) Int. Cl.: G06T 3/4046, G06T 5/50, H04N 7/01, G06T 3/4053

(54) **VIDEO SUPER-RESOLUTION METHOD AND APPARATUS**
VERFAHREN UND VORRICHTUNG ZUR VIDEOSUPERAUFLÖSUNG
PROCÉDÉ ET APPAREIL DE SUPER-RÉSOLUTION VIDÉO

(30) Priority: 17.03.2022 CN 202210265124
(43) Date of publication of application: 22.01.2025
(73) Proprietor: BEIJING BYTEDANCE NETWORK TECHNOLOGY CO., LTD., Beijing 100041 (CN)
(72) Inventor: DONG, Hang, Beijing 100028 (CN)
(74) Representative: Marks & Clerk LLP
(86) International application number: PCT/CN2023/082228
(87) International publication number: WO 2023/174416

(56) References cited:
- CN-A- 103 632 359
- CN-A- 111 489 292
- CN-A- 111 489 292
- CN-A- 112 950 471
- CN-A- 113 592 709
- US-A1- 2010 034 477
- US-B2- 9 258 518
- ODED SHAHAR ET AL: "Space-time super-resolution from a single video", COMPUTER VISION AND PATTERN RECOGNITION (CVPR), 2011 IEEE CONFERENCE ON, IEEE, 20 June 2011 (2011-06-20), pages 3353 - 3360, XP032037862, ISBN: 978-1-4577-0394-2, DOI: 10.1109/CVPR.2011.5995360

## Description

### CROSS-REFERENCE TO RELATED APPLICATIONS

The present disclosure is based on and claims the priority to the Chinese application No. 202210265124.7 filed on March 17, 2022.

### TECHNICAL FIELD

The present disclosure relates to the technical field of image processing, and in particular, to a video super-resolution method and apparatus.

### BACKGROUND

Super-resolution technology for a video, also called as video super-resolution technology, is a technology of recovering a high-resolution video from a low-resolution video. Since a video super-resolution business has become a key business in video quality enhancement at present, the video super-resolution technology is one of research hotspots in the current image processing field.

In recent years, with the development of deep learning technology, in a video super-resolution network model based on a deep learning neural network, many breakthroughs have been achieved, comprising better super-resolution effect and better real-time performance. At present, mainstream sliding window-type video super-resolution network models all utilize the fact that most image frames in a video are all in motion, so that when super-resolution is performed on each image frame in the video, its neighborhood image frames all can provide a large amount of time domain information, for the video super-resolution network model to perform super-resolution on the current image frame.

The patent publications CN 111 489 292 A and US 9 258 518 B2 as well as the non-patent publication by Oded Shahar et al.: "Spacetime super-resolution from a single video", COMPUTER VISION AND PATTERN RECOGNITION, pages 3353-3360, disclose methods and systems for performing super-resolution on frames of a video, in particular taking into account the temporally neighbouring frames.

### SUMMARY

In a first aspect, an embodiment of the present disclosure provides a video super-resolution method, comprising:
decomposing a t-th image frame of a video to be super-resolved and a neighborhood image frame of the t-th image frame, into N image blocks, respectively, t and N being both positive integers;
according to the image blocks obtained by decomposing the t-th image frame and the neighborhood image frame, generating N image block sequences, image blocks in the image block sequence being located at same positions of different image frames, respectively;
calculating motion parameters of the image block sequences, motion parameters of any image block sequence being configured for representing optical flows between image blocks of adjacent image frames in the image block sequence;
determining super-resolution network models corresponding to the image block sequences according to the motion parameters of the image block sequences;
performing super-resolution on the image blocks of the t-th image frame in the image block sequences by using the super-resolution network models corresponding to the image block sequences, to obtain super-resolution image blocks of the t-th image frame; and
generating a super-resolution image frame of the t-th image frame according to the super-resolution image blocks of the t-th image frame.

In a second aspect, an embodiment of the present disclosure provides a video super-resolution apparatus, comprising:
an image decomposition module configured to decompose a t-th image frame of a video to be super-resolved and a neighborhood image frame of the t-th image frame, into N image blocks, respectively, t and N being both positive integers;
a sequence generation module configured to generate N image block sequences according to the image blocks obtained by decomposing the t-th image frame and the neighborhood image frame, image blocks in the image block sequence being located at same positions of different image frames, respectively;
a parameter calculation module configured to calculate motion parameters of the image block sequences, motion parameters of any image block sequence being configured for representing optical flows between image blocks of adjacent image frames in the image block sequence;
a model determination module configured to determine super-resolution network models corresponding to the image block sequences according to the motion parameters of the image block sequences;
an image super-resolution module configured to perform super-resolution on the image blocks of the t-th image frame in the image block sequences by using the super-resolution network models corresponding to the image block sequences, to obtain super-resolution image blocks of the t-th image frame; and
an image generation module configured to generate a super-resolution image frame of the t-th image frame according to the super-resolution image blocks of the t-th image frame.

In a third aspect, an embodiment of the present disclosure provides an electronic device, comprising: a memory and a processor, the memory configured to store a computer program; and the processor configured to, when calling the computer program, cause the electronic device to implement the video super-resolution method according to the first aspect or any of optional implementations of the first aspect.

In a fourth aspect, an embodiment of the present disclosure provides a computer-readable storage medium which, when executed by a computing device, causes the computing device to implement the video super-resolution method according to the first aspect or any of optional implementations of the first aspect.

In a fifth aspect, an embodiment of the present disclosure provides a computer program product, which when run on a computer, causes the computer to implement the video super-resolution method according to the first aspect or any of optional implementations of the first aspect.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

In order to more clearly illustrate technical solutions in the embodiments of the present disclosure or the related art, the drawings that need to be used in the description of the embodiments or the related art will be briefly described below, and it is obvious that for one of ordinary skill in the art, other drawings can be obtained without paying inventive labor.
Fig. 1 is a step flow diagram of a video super-resolution method according to an embodiment of the present disclosure;
Fig. 2 is a schematic diagram of image blocks obtained by decomposing an image frame according to an embodiment of the present disclosure;
Fig. 3 is a schematic diagram of an image block sequence according to an embodiment of the present disclosure;
Fig. 4 is a schematic diagram of an image block mode according to an embodiment of the present disclosure;
Fig. 5 is a schematic diagram of a model for implementing a super-resolution method according to an embodiment of the present disclosure;
Fig. 6 is a schematic diagram of an adaptive super-resolution module according to an embodiment of the present disclosure;
Fig. 7 is a schematic diagram of a first super-resolution network model according to an embodiment of the present disclosure;
Fig. 8 is a schematic diagram of a second super-resolution network model according to an embodiment of the present disclosure;
Fig. 9 is a schematic diagram of a third super-resolution network model according to an embodiment of the present disclosure;
Fig. 10 is a schematic diagram of a video super-resolution apparatus according to an embodiment of the present disclosure;
Fig. 11 is a schematic hardware structural diagram of an electronic device according to an embodiment of the present disclosure.

### DETAILED DESCRIPTION

In order that the above objectives, features and advantages of the present disclosure may be more clearly understood, solutions of the present disclosure will be further described below. It should be noted that, without conflict, the embodiments of the present disclosure and features in the embodiments may be combined with each other.

In the following description, numerous specific details are set forth in order to provide a thorough understanding of the present disclosure, but the present disclosure may be implemented in other way than those described herein; and it is obvious that the embodiments in the description are only a part of the embodiments of the present disclosure, rather than all of them.

It should be noted that, for the convenience of clearly describing the technical solutions of the embodiments of the present disclosure, in the embodiments of the present disclosure, same or similar items with basically same functions and effects are distinguished by using words such as "first", "second", etc., and those skilled in the art can understand that the words such as "first", "second", etc. do not limit the quantity and execution order. For example: a first feature image set and a second feature image set are only configured for distinguishing different feature image sets, rather than limiting the order of the feature image sets.

In the embodiments of the present disclosure, words such as "exemplary" or "for example" are configured for indicating an example, instance, or illustration. Any embodiment or design solution described as "exemplary" or "for example" in the embodiments of the present disclosure should not be construed as more preferred or advantageous than another embodiment or design solution. Exactly, the use of the word "exemplary" or "for example" is intended to present relevant concepts in a specific manner. Furthermore, in the description of the embodiments of the present disclosure, the meaning of "a plurality" means two or more unless otherwise specified.

In the related art, sliding window-type video super-resolution network models all utilizes the fact that most image frames of a video are all in motion, so that when super-resolution is performed on each image frame in the video, its neighborhood image frames can all provide a large amount of time domain information, for the video super-resolution network model to perform super-resolution on the current image frame. However, in some videos, some areas are always stationary objects or backgrounds, and when super-resolution is performed on such videos, due to time domain redundant information brought by the stationary objects or backgrounds, a relatively ideal video super-resolution effect cannot often be obtained by using the neighborhood image frames as inputs, and even the super-resolution effect is inferior to that of super-resolution based on a single image frame. In summary, when time domain redundant information exists in a video, how to improve the super-resolution effect of the video is a problem to be solved urgently.

In view of this, the present disclosure provides a video super-resolution method and apparatus, for improving a video super-resolution effect.

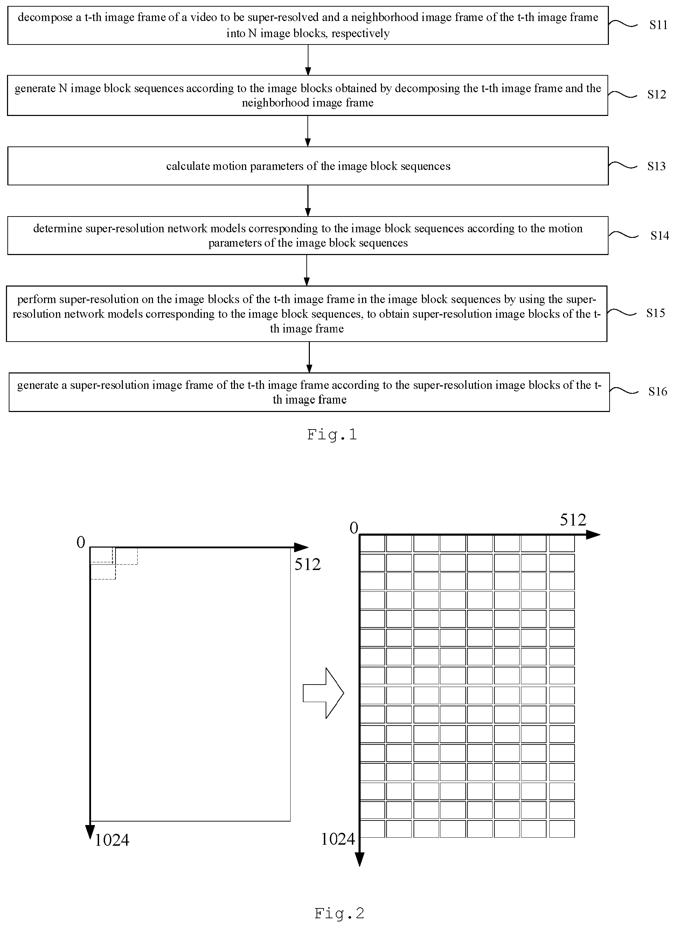

An embodiment of the present disclosure provides a video super-resolution method, and referring to a step flow diagram shown in Fig. 1, the video super-resolution method provided in the embodiment of the present disclosure comprises the following steps S11 to S16:
S11, decomposing a t-th image frame of a video to be super-resolved and a neighborhood image frame of the t-th image frame, into N image blocks, respectively, wherein the t and N are both positive integers.

In some embodiments, an implementation of decomposing any image frame into N image blocks comprises: by a sampling window with a size of one image block sliding from a first pixel of the image frame with a preset stride, sampling positions of the image frame, and taking each sampling area of the sampling window as one image block, thereby decomposing the image frame into the N image blocks.

Exemplarily, referring to Fig. 2, a t-th image frame of a video to be super-resolved comprises 1024*512 pixels, and when the sampling window has a size of 72*72 and a stride of 64, the t-th image frame of the video to be super-resolved may be decomposed into 16*8 image blocks, each image block comprising 72*72 pixels, and adjacent image blocks having an overlapping area therebetween, which has a width of 8 pixels.

The method comprises S12, generating N image block sequences according to the image blocks obtained by decomposing the t-th image frame and the neighborhood image frame, wherein image blocks in the image block sequence are located at same positions of different image frames, respectively.

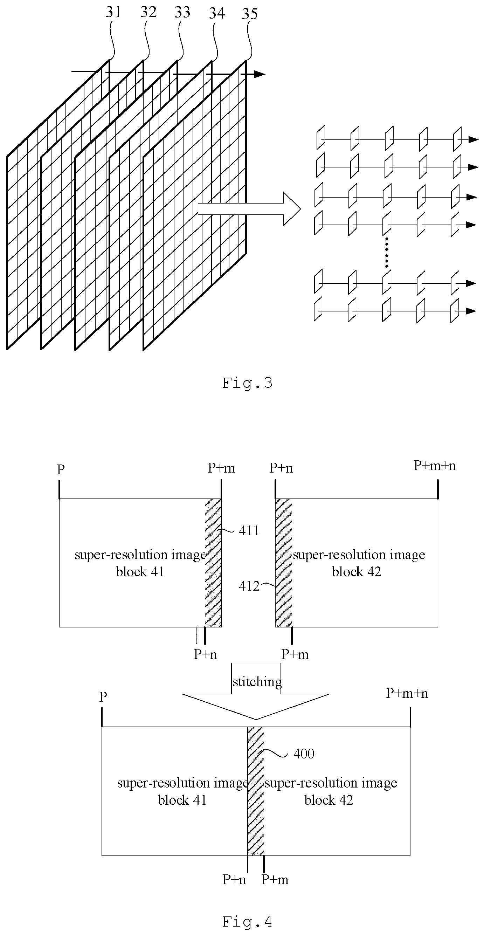

Exemplarily, referring to Fig. 3, the neighborhood image frame of the t-th image frame 33 comprises: a (t-2)-th image frame 31, a (t-1)-th image frame 32, a (t+1)-th image frame 34, and a (t+2)-th image frame 35, illustrated as an example. Each image block sequence comprises 5 image blocks, which respectively are image blocks of the (t-2)-th image frame 31, the (t-1)-th image frame 32, the t-th image frame 33, the (t+1)-th image frame 34 and the (t+2)-th image frame 35, and image blocks located in the same image block sequence have same positions in image frames to which the image blocks belong.

The method comprises S13, calculating motion parameters of the image block sequences, wherein motion parameters of any image block sequence are configured for representing optical flows between image blocks of adjacent image frames in the image block sequence.

Exemplarily, an image block sequence $\left\{{x}_{\left[t-2:t+2\right]}^{i}\right\}$ comprises: an image block ${x}_{t - 2}^{i}$ of the (t-2)-th image frame, an image block ${x}_{t - 1}^{i}$ of the (t-1)-th image frame, an image block ${x}_{t}^{i}$ of the t-th image frame, an image block ${x}_{t + 1}^{i}$ of the (t+1)-th image frame, and an image block ${x}_{t + 2}^{i}$ of the (t+2)-th image frame, then motion parameters of the image block sequence $\left\{{x}_{\left[t-2:t+2\right]}^{i}\right\}$ are configured for representing an optical flow between the image blocks ${x}_{t - 2}^{i}$ and ${x}_{t - 1}^{i}$*,* an optical flow between the image blocks ${x}_{t - 1}^{i}$ and ${x}_{t}^{i}$*,* an optical flow between the image blocks ${x}_{t}^{i}$ and ${x}_{t + 1}^{i}$*,* and an optical flow between the image blocks ${x}_{t + 1}^{i}$ and ${x}_{t + 2}^{i}$.

As an optional implementation of the embodiment of the present disclosure, the calculating motion parameters of the image block sequences comprises, for each image block sequence, performing the following steps a to c:
step a, calculating optical flows between image blocks of adjacent image frames in the image block sequence.

As described above, the image block sequence $\left\{{x}_{\left[t-2:t+2\right]}^{i}\right\}$ comprises: the image block ${x}_{t - 2}^{i}$ of the (t-2)-th image frame, the image block ${x}_{t - 1}^{i}$ of the (t-1)-th image frame, the image block ${x}_{t}^{i}$ of the t-th image frame, the image block ${x}_{t + 1}^{i}$ of the (t+1)-th image frame, and the image block ${x}_{t + 2}^{i}$ of the (t+2)-th image frame, then the optical flow between the image blocks ${x}_{t - 2}^{i}$ and ${x}_{t - 1}^{i}$*,* the optical flow between the image blocks ${x}_{t - 1}^{i}$ and ${x}_{t}^{i}$*,* the optical flow between the image blocks ${x}_{t}^{i}$ and ${x}_{t + 1}^{i}$*,* and the optical flow between the image blocks ${x}_{t + 1}^{i}$ and ${x}_{t + 2}^{i}$ are calculated.

Exemplarily, the optical flows between the image blocks of the adjacent image frames in the image block sequence may be calculated based on a dense inverse search (DIS) optical flow algorithm.

The method comprises Step b, for an optical flow between image blocks of each pair of adjacent image frames, calculating an average value of absolute values of optical flows corresponding to pixels, to obtain a motion parameter between the image blocks of the adjacent image frames.

The motion parameter between the image blocks of the adjacent image frames in the image block sequence $\left\{{x}_{\left[t-2:t+2\right]}^{i}\right\}$ is represented as: ${m}_{q \to q + 1}^{i}$*,* the optical flow algorithm is represented as *f*(...), averaging the optical flows corresponding to the pixels is represented as *mean(...),* and calculating an absolute value is represented as |...|, then: ${m}_{q \to q + 1}^{i} = mean \left(\left|f\left({x}_{q}^{i}, {x}_{q + 1}^{i}\right)\right|\right)$

For example, the motion parameter between the image blocks ${x}_{t - 1}^{i}$ and ${x}_{t}^{i}$ is: ${m}_{- 1 \to 0}^{i} = mean \left(\left|f\left({x}_{t - 1}^{i}, {x}_{t}^{i}\right)\right|\right)$

For another example, the motion parameter between the image blocks ${x}_{t + 1}^{i}$ and ${x}_{t + 2}^{i}$ is: ${m}_{2 \to 1}^{i} = mean \left(\left|f\left({x}_{t + 2}^{i}, {x}_{t + 1}^{i}\right)\right|\right)$

The method comprises Step S14, determining super-resolution network models corresponding to the image block sequences according to the motion parameters of the image block sequences.

As an optional implementation of the embodiment of the present disclosure, the neighborhood image frame of the t-th image frame comprises the (t-2)-th image frame, the (t-1)-th image frame, the (t+1)-th image frame, and the (t+2)-th image frame, and the above step S14 (determining super-resolution network models corresponding to the image block sequences according to the motion parameters of the image block sequences) comprises, for each image block sequence, performing the following steps 1 to 5:
step 1, determining whether a first motion parameter and a second motion parameter of the image block sequence are both less than a preset threshold.

The first motion parameter is a motion parameter between the image block of the t-th image frame and the image block of the (t-1)-th image frame, and the second motion parameter is a motion parameter between the image block of the t-th image frame and the image block of the (t+1)-th image frame.

Let: the motion parameter between the image block ${x}_{t}^{i}$ of the t-th image frame and the image block ${x}_{t - 1}^{i}$ of the (t-1)-th image frame is ${m}_{- 1 \to 0}^{i}$, the motion parameter between the image block ${x}_{t + 1}^{i}$ of the (t+1)-th image frame and the image block ${x}_{t}^{i}$ of the t-th image frame is ${m}_{1 \to 0}^{i}$, and the preset threshold is γ, then the above step 1 is to determine whether ${m}_{- 1 \to 0}^{i}$ and ${m}_{1 \to 0}^{i}$ are less than γ, respectively.

In the above step 1, if the first motion parameter and the second motion parameter are both less than the preset threshold, the following step 2 is performed.

The method comprises Step 2, determining a super-resolution network model corresponding to the image block sequence as a first super-resolution network model.

As an optional implementation of the embodiment of the present disclosure, the first super-resolution network model is a single-frame super-resolution network model.

In the above step 1, if the first motion parameter and/or the second motion parameter are/is greater than or equal to the preset threshold, the following step 3 is performed.

The method comprises Step 3, determining whether a third motion parameter and a fourth motion parameter of the image block sequence are both less than the preset threshold.

The third motion parameter is a motion parameter between the image block of the (t-2)-th image frame and the image block of the (t-1)-th image frame, and the fourth motion parameter is a motion parameter between the image block of the (t+1)-th image frame and the image block of the (t+2)-th image frame.

Let: the motion parameter between the image block ${x}_{t - 2}^{i}$ of the (t-2)-th image frame and the image block ${x}_{t - 1}^{i}$ of the (t-1)-th image frame is ${m}_{- 2 \to - 1}^{i}$, the motion parameter between the image block ${x}_{t + 1}^{i}$ of the (t+1)-th image frame and the image block ${x}_{t + 2}^{i}$ of the (t+2)-th image frame is ${m}_{2 \to 1}^{i}$*,* and the preset threshold is γ, then the above step 3 is to determine whether ${m}_{- 2 \to - 1}^{i}$ and ${m}_{2 \to 1}^{i}$ are less than the preset threshold, respectively.

In the above step 3, if the third motion parameter and the fourth motion parameter are both less than the preset threshold, the following step 4 is performed.

The method comprises Step 4, determining a super-resolution network model corresponding to the image block sequence as a second super-resolution network model.

As an optional implementation of the embodiment of the present disclosure, the second super-resolution network model is configured for performing super-resolution on the image blocks of the t-th image frame based on the image block of the (t-1)-th image frame, the image block of the t-th image frame, and the image block of the (t+1)-th image frame.

In the above step 3, if the third motion parameter and/or the fourth motion parameter are/is greater than or equal to the preset threshold, the following step 5 is performed.

The method comprises Step 5, determining a super-resolution network model corresponding to the image block sequence as a third super-resolution network model.

As an optional implementation of the embodiment of the present disclosure, the third super-resolution network model is configured for performing super-resolution on the image block of the t-th image frame based on all the image blocks in the image block sequence.

Let: the motion parameter between the image block ${x}_{t}^{i}$ of the t-th image frame and the image block ${x}_{t - 1}^{i}$ of the (t-1)-th image frame is ${m}_{- 1 \to 0}^{i}$, the motion parameter between the image block ${x}_{t + 1}^{i}$ of the (t+1)-th image frame and the image block ${x}_{t}^{i}$ of the t-th image frame is ${m}_{1 \to 0}^{i}$, the motion parameter between the image block ${x}_{t - 2}^{i}$ of the (t-2)-th image frame and the image block ${x}_{t - 1}^{i}$ of the (t-1)-th image frame is ${m}_{- 2 \to - 1}^{i}$, the motion parameter between the image block ${x}_{t + 1}^{i}$ of the (t+1)-th image frame and the image block ${x}_{t + 2}^{i}$ of the (t+2)-th image frame is ${m}_{2 \to 1}^{i}$*,* and the preset threshold is γ . The first super-resolution network model is ${L}_{1}^{i}$, the second super-resolution network model is ${L}_{2}^{i}$*,* and the third super-resolution network model is ${L}_{3}^{i}$, then the above steps 1 to 5 may be represented as follows: ${L}_{j}^{i} = \left\{\begin{matrix}{L}_{1}^{i} ; {m}_{- 1 \to 0}^{i} < γ , {m}_{1 \to 0}^{i} < γ \\ {L}_{2}^{i} ; {m}_{- 1 \to 0}^{i} > \frac{γ and}{or} {m}_{- 1 \to 0}^{i} > γ , \\ {L}_{3}^{i} ; otherwise\end{matrix}\right. {m}_{- 1 \to 0}^{i} < γ , {m}_{1 ← 0}^{i} < γ$

The method comprises Step S15, performing super-resolution on the image blocks of the t-th image frame in the image block sequences by using the super-resolution network models corresponding to the image block sequences, to obtain super-resolution image blocks of the t-th image frame.

Specifically, since one super-resolution image block of the t-th image frame can be obtained according to each image block sequence, and there are N image block sequences in total, N super-resolution image blocks in total of the t-th image frame can be obtained.

The method comprises Step S16, generating a super-resolution image frame of the t-th image frame according to the super-resolution image blocks of the t-th image frame.

As an optional implementation of the embodiment of the present disclosure, when the adjacent image blocks in the image blocks obtained by decomposing the t-th image frame and the neighboring image frame do not have an overlapping area, the above step S16 (generating a super-resolution image frame of the t-th image frame according to the super-resolution image blocks of the t-th image frame) comprises:
stitching the super-resolution image blocks of the t-th image frame into the super-resolution image frame of the t-th image frame.

As an optional implementation of the embodiment of the present disclosure, when the adjacent image blocks in the image blocks obtained by decomposing the t-th image frame and the adjacent image frames have overlapping areas, the above step S16 (generating a super-resolution image frame of the t-th image frame according to the super-resolution image blocks of the t-th image frame) comprises:
stitching the super-resolution image blocks of the t-th image frame to generate a stitched image; and
setting a pixel value of a pixel in an overlapping area of the super-resolution image blocks in the stitched image as an average value of pixel values of corresponding pixels in the super-resolution image blocks, to generate the super-resolution image frame of the t-th image frame.

Exemplarily, referring to Fig. 4, in Fig. 4, a starting pixel column of a super-resolution image block 41 is a P-th column, an ending pixel column of the super-resolution image block 41 is a (P+m)-th column, a starting pixel column of a super-resolution image block 42 is a (P+n)-th column, and an ending pixel column of the super-resolution image block 42 is a (P+m+n)-th column, when the super-resolution image block 41 and the super-resolution image block 42 are stitched, an area 411 of the super-resolution image block 41 will be overlapped with an area 412 of the super-resolution image block 42, and therefore a pixel value of any pixel in an overlapping area 400 is an average value of corresponding pixels in the area 411 and the area 412. For example: a pixel value of a pixel (x1, y1) in the overlapping area 400 is an average value of a pixel value of a pixel (x1, y1) in the area 411 and a pixel value of a pixel (x1, y1) in the area 412.

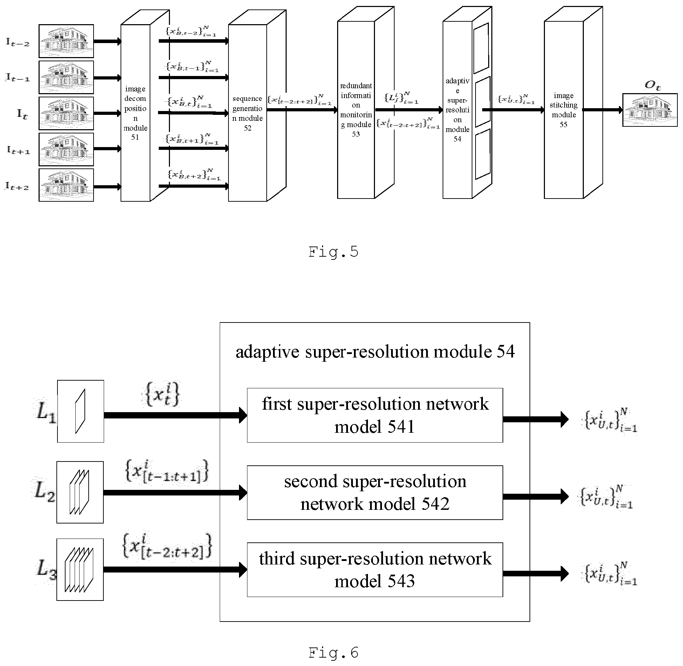

Referring to Fig. 5, Fig. 5 is a schematic structural diagram of a video super-resolution network for implementing the above video super-resolution method. The video super-resolution network for implementing the video super-resolution method comprises: an image decomposition module 51, a sequence generation module 52, a redundant information monitoring module 53, an adaptive super-resolution module 54, and an image stitching module 55.

The image decomposition module 51 is configured to decompose a (t-2)-th image frame I_{*t*-2} into N image blocks ${\left\{{x}_{B , t - 2}^{i}\right\}}_{i = 1}^{N}$, decompose a (t-1)-th image frame I_{*t*-1} into N image blocks ${\left\{{x}_{B , t - 1}^{i}\right\}}_{i = 1}^{N}$, decompose a t-th image frame It into N image blocks ${\left\{{x}_{B , t}^{i}\right\}}_{i = 1}^{N}$, decompose a (t+1)-th image frame I_{*t*+1} into N image blocks ${\left\{{x}_{B , t + 1}^{i}\right\}}_{i = 1}^{N}$, and decompose a (t+2)-th image frame I_{*t*+2} into N image blocks ${\left\{{x}_{B , t + 2}^{i}\right\}}_{i = 1}^{N}$.

The sequence generation module 52 is configured to generate N image block sequences ${\left\{{x}_{\left[t-2:t+2\right]}^{i}\right\}}_{i = 1}^{N}$ according to ${\left\{{x}_{B , t - 2}^{i}\right\}}_{i = 1}^{N} , {\left\{{x}_{B , t - 1}^{i}\right\}}_{i = 1}^{N}$, ${\left\{{x}_{B , t}^{i}\right\}}_{i = 1}^{N} , {\left\{{x}_{B , t + 1}^{i}\right\}}_{i = 1}^{N} , {\left\{{x}_{B , t + 2}^{i}\right\}}_{i = 1}^{N}$.

The redundant information monitoring module 53 is configured to calculate motion parameters of the image block sequences ${\left\{{x}_{\left[t-2:t+2\right]}^{i}\right\}}_{i = 1}^{N}$, and determine super-resolution network models ${\left\{{L}_{j}^{i}\right\}}_{i = 1}^{N}$ of the image block sequences according to the motion parameters of the image block sequences ${\left\{{x}_{\left[t-2:t+2\right]}^{i}\right\}}_{i = 1}^{N}$.

The adaptive super-resolution module 54 comprises the super-resolution network models corresponding to the image block sequences, and is configured to perform super-resolution on the image blocks of the t-th image frame in the image block sequences by using the super-resolution network models corresponding to the image block sequences, to obtain super-resolution image blocks ${\left\{{x}_{U , t}^{i}\right\}}_{i = 1}^{N}$ of the t-th image frame.

The image stitching module 55 is configured to generate a super-resolution image frame *Oₜ* of the t-th image frame according to the super-resolution image blocks ${\left\{{x}_{U , t}^{i}\right\}}_{i = 1}^{N}$ of the t-th image frame.

According to the video super-resolution method provided in the embodiment of the present disclosure, when super-resolution is performed on an image of a t-th image frame, firstly, the t-th image frame of a video to be super-resolved and a neighborhood image frame of the t-th image frame are respectively decomposed into N image blocks, and N image block sequences are generated according to the image blocks obtained by decomposing the t-th image frame and the neighborhood image frame, then motion parameters of the image block sequences are calculated, and then super-resolution network models corresponding to the image block sequences are determined according to the motion parameters of the image block sequences, super-resolution is performed on the image blocks of the t-th image frame in the image block sequences by using the super-resolution network models corresponding to the image block sequences to obtain super-resolution image blocks of the t-th image frame, and a super-resolution image frame of the t-th image frame is generated according to the super-resolution image blocks of the t-th image frame. Since when super-resolution is performed on the t-th image frame image according to the video super-resolution method provided in the embodiment of the present disclosure, the super-resolution network model corresponding to each image block sequence can be determined according to the motion parameters of the image block sequences, and super-resolution is performed by adaptively using different super-resolution network models for different situations, the video super-resolution effect can be improved by the video super-resolution method provided in the embodiment of the present disclosure.

Exemplarily, referring to Fig. 6, an adaptive super-resolution module 54 shown in Fig. 5 comprises a first super-resolution network model 541, a second super-resolution network model 542, and a third super-resolution network model 543. The first super-resolution network model 541, when performing super-resolution on the image block of the t-th image frame, will use the image block $\left\{{x}_{t}^{i}\right\}$ of the t-th image frame; the second super-resolution network model 542, when performing super-resolution on the image block of the t-th image frame, will use the image blocks $\left\{{x}_{\left[t-1:t+1\right]}^{i}\right\}$ of the (t-1)-th image frame, the t-th image frame and the (t+1)-th image frame; and the third super-resolution network model 543, when performing super-resolution on the image block of the t-th image frame, will use all the image blocks $\left\{{x}_{\left[t-2:t+2\right]}^{i}\right\}$ in the image block sequence.

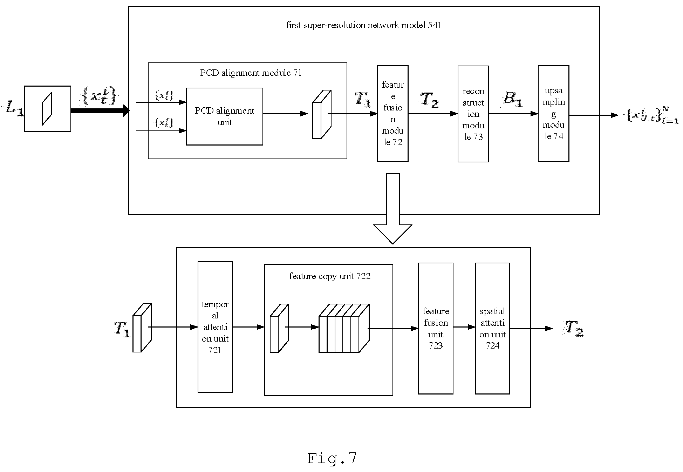

As an optional implementation of the embodiment of the present disclosure, referring to a schematic model structure diagram of a first super-resolution network model shown in Fig. 7, an implementation of performing, by the first super-resolution network model, super-resolution on the image block of the t-th image frame comprises the following steps I to IV:
step I, processing, by a pyramid cascading and deformable convolutions (PCD) alignment module 71, the image block $\left\{{x}_{t}^{i}\right\}$ of the t-th image frame to obtain a first feature *T*₁.

Referring to Fig. 7, an input of the PCD alignment module 71 is two image blocks, whereas the input of the PCD alignment module in the above step I comprises only one image block (the image block of the t-th image frame), so that a copy of the image block of the t-th image frame can be made and used as an input to the PCD alignment module together with an original image block.

The method comprises Step II, processing, by a feature fusion module 72, the first feature to obtain a second feature *T*₂.

The second feature is a feature obtained by stitching five first features in a channel dimension. It should be appreciated by those skilled in the art that the second feature can be a feature obtained by stitching a plurality of the first features in the channel dimension, the number of the first features configured for stitching being not limited herein.

That is, assuming that a tensor of the first feature is *C* * *H* * *W,* and a tensor of the second feature is 5 * *C* * *H* * *W. C* is the number of channels of the first feature, *H* is a length of the first feature, and *W* is a width of the first feature.

Exemplarily, referring to Fig. 7, the feature fusion module 72 may comprise a temporal attention unit 721, a feature copy unit 722, a feature fusion unit 723, and a spatial attention unit 724. The feature copy unit 722 is configured to copy the first feature 4 times and stitch it with the original first feature.

The method comprises Step III , reconstructing, by a reconstruction module 73, the second feature *T*₂ to obtain a first image block *B*₁.

The method comprises Step IV, upsampling, by an upsampling module 74, the first image block *B*₁ to obtain the super-resolution image blocks ${\left\{{x}_{U , t}^{i}\right\}}_{i = 1}^{N}$ corresponding to the image blocks of the t-th image frame.

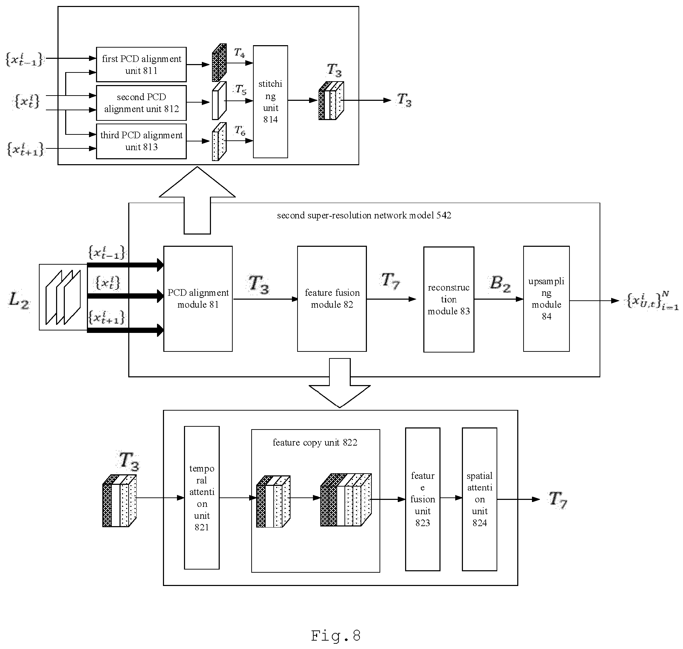

As an optional implementation of the embodiment of the present disclosure, referring to a schematic model structure diagram of a second super-resolution network model shown in Fig. 8, an implementation of performing, by the second super-resolution network model, super-resolution on the image block of the t-th image frame comprises the following steps i to iv:
step i, processing, by a PCD alignment module 81, the image block $\left\{{x}_{t - 1}^{i}\right\}$ of the (t-1) -th image frame, the image block $\left\{{x}_{t}^{i}\right\}$ of the t-th image frame and the image block $\left\{{x}_{t + 1}^{i}\right\}$ of the (t+1)-th image frame to obtain a third feature *T*₃.

The third feature *T*₃ is a feature obtained by stitching a fourth feature *T*₄, a fifth feature *T*₅ and a sixth feature *T*₆ in a channel dimension, the fourth feature *T*₄ being a feature obtained by processing, by the PCD alignment module, the image block $\left\{{x}_{t - 1}^{i}\right\}$ of the (t-1)-th image frame and the image block $\left\{{x}_{t}^{i}\right\}$ of the t-th image frame, the fifth feature *T*₅ being a feature obtained by processing, by the PCD alignment module, the image block $\left\{{x}_{t}^{i}\right\}$ of the t-th image frame, and the sixth feature being a feature obtained by processing, by the PCD alignment module, the image block $\left\{{x}_{t}^{i}\right\}$ of the t-th image frame and the image block $\left\{{x}_{t + 1}^{i}\right\}$ of the (t+1)-th image frame.

Referring to Fig. 8, the PCD alignment module 81 comprises a first PCD alignment unit 811, a second PCD alignment unit 812, a third PCD alignment unit 813, and a stitching unit 814. The first PCD alignment unit 811 is configured to process the image block $\left\{{x}_{t - 1}^{i}\right\}$ of the (t-1)-th image frame and the image block $\left\{{x}_{t}^{i}\right\}$ of the t-th image frame to obtain the fourth feature *T*₄; the second PCD alignment unit 812 is configured to process the image block $\left\{{x}_{t}^{i}\right\}$ of the t-th image frame to obtain the fifth feature *T*₅; the third PCD alignment unit 813 is configured to process the image block $\left\{{x}_{t}^{i}\right\}$ of the t-th image frame and the image block $\left\{{x}_{t + 1}^{i}\right\}$ of the (t+1)-th image frame to obtain the fifth feature *T*₆; and the stitching unit 814 is configured to stitch the fourth feature *T*₄, the fifth feature *T*₅ and the sixth feature *T*₆ to obtain the third feature *T*₃.

The method comprises Step ii, processing, by a feature fusion module 82, the third feature *T*₃ to obtain a seventh feature *T*₇*.*

The seventh feature *T*₇ is a feature obtained by stitching the fourth feature *T*₄, the third feature *T*₃ and the fifth feature *T*₅ in a channel dimension.

Exemplarily, referring to Fig. 8, the feature fusion module 82 may comprise a temporal attention unit 821, a feature copy unit 822, a feature fusion unit 823, and a spatial attention unit 824. The feature copy unit 822 is configured to copy the fourth feature *T*₄ and the fifth feature *T*₅ in the third feature *T*₃ once and stitch them with the third feature *T*₃.

The method comprises Step iii , reconstructing, by a reconstruction module 83, the seventh feature *T*₇ to obtain a second image block *B*₂.

The method comprises Step iv, upsampling, by an upsampling module 84, the second image block *B*₂ to obtain the super-resolution image blocks ${\left\{{x}_{U , t}^{i}\right\}}_{i = 1}^{N}$ corresponding to the image blocks of the t-th image frame.

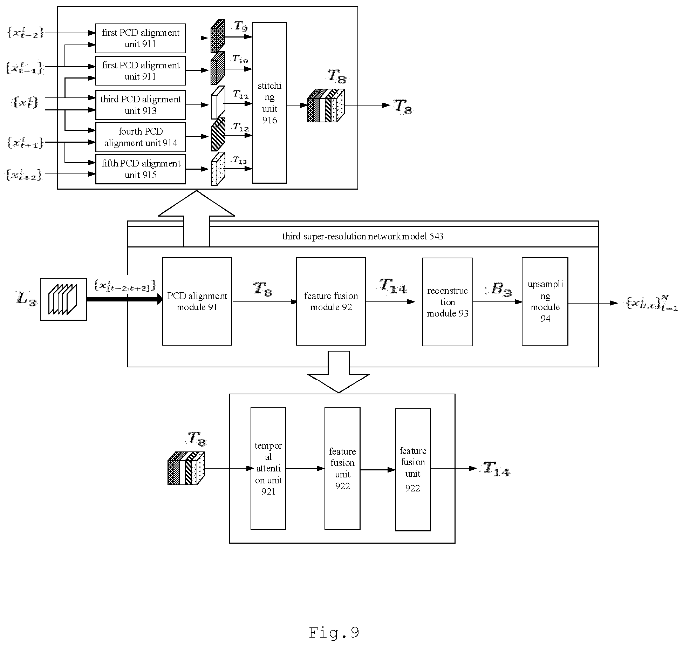

As an optional implementation of the embodiment of the present disclosure, referring to a schematic model structural diagram of a third super-resolution network model shown in Fig. 9, performing, by the third super-resolution network model, super-resolution on the image block of the t-th image frame in the image block sequence comprises the following steps ① to ④:
step ①, processing, by a PCD alignment module 91, all the image blocks in the image block sequences ${\left\{{x}_{\left[t-2:t+2\right]}^{i}\right\}}_{i = 1}^{N}$ to obtain an eighth feature *T*₈.

The eighth feature *T*₈ is a feature obtained by stitching a ninth feature *T*₉, a tenth feature *T*₁₀, an eleventh feature *T*₁₁, a twelfth feature *T*₁₂ and a thirteenth feature *T*₁₃ in a channel dimension, the ninth feature *T*₉ being a feature obtained by processing, by the PCD alignment module, the image block $\left\{{x}_{t - 2}^{i}\right\}$ of the (t-2)-th image frame and the image block $\left\{{x}_{t - 1}^{i}\right\}$ of the (t-1)-th image frame, the tenth feature being a feature obtained by processing, by the PCD alignment module, the image block $\left\{{x}_{t - 1}^{i}\right\}$ of the (t-1)-th image frame and the image block $\left\{{x}_{t}^{i}\right\}$ of the t-th image frame, the eleventh feature being a feature obtained by processing, by the PCD alignment module, the image block $\left\{{x}_{t}^{i}\right\}$ of the t-th image frame, the twelfth feature being a feature obtained by processing, by the PCD alignment module, the image block $\left\{{x}_{t}^{i}\right\}$ of the t-th image frame and the image block $\left\{{x}_{t + 1}^{i}\right\}$ of the (t+1)-th image frame, the thirteenth feature being a feature obtained by processing, by the PCD alignment module, the image block $\left\{{x}_{t + 1}^{i}\right\}$ of the (t+1)-th image frame and the image block $\left\{{x}_{t + 2}^{i}\right\}$ of the (t+2)-th image frame.

Exemplarily, referring to Fig. 9, the PCD alignment module 91 comprises a first PCD alignment unit 911, a second PCD alignment unit 912, a third PCD alignment unit 913, a fourth PCD alignment unit 914, a fifth PCD alignment unit 915, and a stitching unit 916. The first PCD alignment unit 911 is configured to process the image block $\left\{{x}_{t - 2}^{i}\right\}$ of the (t-2)-th image frame and the image block $\left\{{x}_{t - 1}^{i}\right\}$ of the (t-1)-th image frame to obtain the ninth feature *T*₉; the second PCD alignment unit 912 is configured to process the image block $\left\{{x}_{t - 1}^{i}\right\}$ of the (t-1)-th image frame and the image block $\left\{{x}_{t}^{i}\right\}$ of the t-th image frame to obtain the tenth feature *T*₁₀; the third PCD alignment unit 913 is configured to process the image block $\left\{{x}_{t}^{i}\right\}$ of the t-th image frame to obtain the eleventh feature *T*₁₁; the fourth PCD alignment unit 915 is configured to process the image block $\left\{{x}_{t}^{i}\right\}$ of the t-th image frame and the image block $\left\{{x}_{t + 1}^{i}\right\}$ of the (t+1)-th image frame to obtain the twelfth feature *T*₁₂; the fifth PCD alignment unit 915 is configured to process the image block $\left\{{x}_{t + 1}^{i}\right\}$ of the (t+1)-th image frame and the image block $\left\{{x}_{t + 2}^{i}\right\}$ of the (t+2)-th image frame to obtain the thirteenth feature *T*₁₃; and the stitching unit 916 is configured to stitch the ninth feature *T*₉, the tenth feature *T*₁₀, the eleventh feature *T*₁₁, the twelfth feature *T*₁₂ and the thirteenth feature *T*₁₃ to obtain the eighth feature *T*₈.

The method comprises Step ②, processing, by a feature fusion module 92, the eighth feature *T*₈ to obtain a fourteenth feature *T*₁₄.

Exemplarily, referring to Fig. 9, the feature fusion module 92 may comprise a temporal attention unit 921, a feature fusion unit 922, and a spatial attention unit 923.

The method comprises Step ③, reconstructing, by a reconstruction module 93, the fourteenth feature *T*₁₄ to obtain a third image block *B*₃.

The method comprises Step ④, upsampling, by an upsampling module 94, the third image block *B*₃ to obtain the super-resolution image blocks ${\left\{{x}_{U , t}^{i}\right\}}_{i = 1}^{N}$ corresponding to the image blocks of the t-th image frame in the image block sequences.

Based on the same inventive concept, as an implementation of the above method, an embodiment of the present disclosure further provides a video super-resolution apparatus, which corresponds to the foregoing method embodiment, and for convenience of reading, details in the foregoing method embodiment are not repeated in this apparatus embodiment one by one, but it should be clear that the video super-resolution apparatus in this embodiment can correspondingly implement all contents in the foregoing method embodiment.

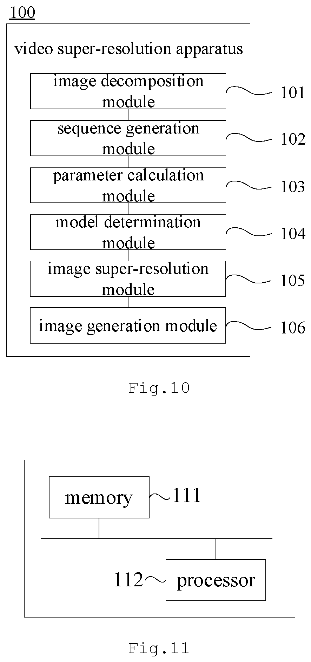

An embodiment of the present disclosure provides a video super-resolution apparatus. Fig. 10 is a schematic structural diagram of the video super-resolution apparatus, as shown in Fig. 10, the video super-resolution apparatus 100 comprising:
an image decomposition module 101 configured to decompose a t-th image frame of a video to be super-resolved and a neighborhood image frame of the t-th image frame, into N image blocks, respectively, t and N being both positive integers;
a sequence generation module 102 configured to generate N image block sequences according to the image blocks obtained by decomposing the t-th image frame and the neighborhood image frame, image blocks in the image block sequence being located at same positions of different image frames, respectively;
a parameter calculation module 103 configured to calculate motion parameters of the image block sequences, motion parameters of any image block sequence being configured for representing optical flows between image blocks of adjacent image frames in the image block sequence;
a model determination module 104 configured to determine super-resolution network models corresponding to the image block sequences according to the motion parameters of the image block sequences;
an image super-resolution module 105 configured to perform super-resolution on the image blocks of the t-th image frame in the image block sequences by using the super-resolution network models corresponding to the image block sequences, to obtain super-resolution image blocks of the t-th image frame; and
an image generation module 106 configured to generate a super-resolution image frame of the t-th image frame according to the super-resolution image blocks of the t-th image frame.

As an optional implementation of the embodiment of the present disclosure, the parameter calculation module 103 is specifically configured to calculate, for each image block sequence, the optical flows between the image blocks of the adjacent image frames in the image block sequence; calculate, for an optical flow between image blocks of each pair of adjacent image frames, an average value of absolute values of optical flows corresponding to pixels to obtain a motion parameter between the image blocks of the adjacent image frames; and obtain the motion parameters of the image block sequence according to the motion parameters between the image blocks of the adjacent image frames in the image block sequence.

As an optional implementation of the embodiment of the present disclosure, the neighborhood image frame of the t-th image frame comprises:
a (t-2)-th image frame, a (t-1)-th image frame, a (t+1)-th image frame and a (t+2)-th image frame of the video to be super-resolved.

As an optional implementation of the embodiment of the present disclosure, the model determination module 104 is specifically configured to determine, for each image block sequence, whether a first motion parameter and a second motion parameter of the image block sequence are both less than a preset threshold, the first motion parameter being a motion parameter between the image block of the t-th image frame and the image block of the (t-1)-th image frame, and the second motion parameter being a motion parameter between the image block of the t-th image frame and the image block of the (t+1)-th image frame; if the first motion parameter and the second motion parameter are both less than the preset threshold, determine that the super-resolution network model corresponding to the image block sequence is a first super-resolution network model; if the first motion parameter and/or the second motion parameter are/is greater than or equal to the preset threshold, determine whether a third motion parameter and a fourth motion parameter of the image block sequence are both less than the preset threshold, the third motion parameter being a motion parameter between the image block of the (t-2)-th image frame and the image block of the (t-1)-th image frame, and the fourth motion parameter being a motion parameter between the image block of the (t+1)-th image frame and the image block of the (t+2)-th image frame; if the third motion parameter and the fourth motion parameter are both less than the preset threshold, determine that the super-resolution network model corresponding to the image block sequence is a second super-resolution network model; and if the third motion parameter and/or the fourth motion parameter are/is greater than or equal to the preset threshold, determine that the super-resolution network model corresponding to the image block sequence is a third super-resolution network model.

As an alternative implementation of the embodiment of the present disclosure,
the first super-resolution network model is a single-frame super-resolution network model;
the second super-resolution network model is configured for performing super-resolution on the image block of the t-th image frame based on the image block of the (t-1)-th image frame, the image block of the t-th image frame and the image block of the (t+1)-th image frame;
the third super-resolution network model is configured for performing super-resolution on the image block of the t-th image frame based on all the image blocks in the image block sequence.

As an optional implementation of the embodiment of the present disclosure, the image super-resolution module 105 is specifically configured to process, by a pyramid cascading and deformable convolutions (PCD) alignment module, the image block of the t-th image frame to obtain a first feature; process, by a feature fusion module, the first feature to obtain a second feature, the second feature being a feature obtained by stitching five first features in a channel dimension; reconstruct, by a reconstruction module, the second feature to obtain a first image block; and upsampling, by an upsampling module, the first image block to obtain a super-resolution image block corresponding to the image block of the t-th image frame.

As an optional implementation of the embodiment of the present disclosure, the image super-resolution module 105 is specifically configured to process, by a PCD alignment module, the image block of the (t-1)-th image frame, the image block of the t-th image frame, and the image block of the (t+1)-th image frame to obtain a third feature, the third feature being a feature obtained by stitching a fourth feature, a fifth feature and a sixth feature in a channel dimension, the fourth feature being a feature obtained by processing, by the PCD alignment module, the image block of the (t-1)-th image frame and the image block of the t-th image frame, the fifth feature being a feature obtained by processing, by the PCD alignment module, the image block of the t-th image frame, and the sixth feature being a feature obtained by processing, by the PCD alignment module, the image block of the t-th image frame and the image block of the (t+1)-th image frame; process, by a feature fusion module, the third feature to obtain a seventh feature, the seventh feature being a feature obtained by stitching the fourth feature, the third feature and the fifth feature in a channel dimension; reconstruct, by a reconstruction module, the seventh feature to obtain a second image block; and upsample, by an upsampling module, the second image block to obtain a super-resolution image block corresponding to the image block of the t-th image frame.

As an optional implementation of the embodiment of the present disclosure, the image super-resolution module 105 is specifically configured to process, by a PCD alignment module, all the image blocks in the image block sequence to obtain an eighth feature, the eighth feature being a feature obtained by stitching a ninth feature, a tenth feature, an eleventh feature, a twelfth feature and a thirteenth feature in a channel dimension, the ninth feature being a feature obtained by processing, by the PCD alignment module, the image block of the (t-2)-th image frame and the image block of the (t-1)-th image frame, the tenth feature being a feature obtained by processing, by the PCD alignment module, the image block of the (t-1) -th image frame and the image block of the t-th image frame, the eleventh feature being a feature obtained by processing, by the PCD alignment module, the image block of the t-th image frame, the twelfth feature being a feature obtained by processing, by the PCD alignment module, the image block of the t-th image frame and the image block of the (t+1)-th image frame, and the thirteenth feature being a feature obtained by processing, by the PCD alignment module, the image block of the (t+1)-th image frame and the image block of the (t+2)-th image frame; process, by a feature fusion module, the eighth feature to obtain a fourteenth feature; reconstruct, by a reconstruction module, the fourteenth feature to obtain a third image block; and upsample, by an upsampling module, the third image block to obtain a super-resolution image block corresponding to the image block of the t-th image frame in the image block sequence.

As an optional implementation of the embodiment of the present disclosure, adjacent image blocks in the image blocks obtained by decomposing the t-th image frame and the adjacent image frame have an overlapping area; and
the image generation module 106 is specifically configured to stitch the super-resolution image blocks of the t-th image frame to generate a stitched image; and set a pixel value of each pixel in an overlapping area of the super-resolution image blocks in the stitched image as an average value of pixel values of corresponding pixels in the super-resolution image blocks, to generate the super-resolution image frame of the t-th image frame.

The above modules may be implemented as software components executed on one or more general-purpose processors, or as hardware performing certain functions or combinations thereof, such as a programmable logic device and/or application specific integrated circuit. In some embodiments, these modules may be embodied in a form of a software product that may be stored in a non-volatile storage medium including instructions that cause a computer device (e.g., a personal computer, server, network device, mobile terminal, etc.) to implement the method described in the embodiments of the present disclosure. In other embodiments, the above modules may also be implemented on a single device or distributed across a plurality of devices. The functions of these modules may be combined with each other, or further divided into a plurality of sub-modules.

The video super-resolution apparatus provided in this embodiment may perform the video super-resolution method provided in the above method embodiment, and have similar implementation principles and technical effects, which are not repeated here.

Based on the same inventive concept, an embodiment of the present disclosure further provides an electronic device. Fig. 11 is a schematic structural diagram of an electronic device according to an embodiment of the present disclosure, as shown in Fig. 11, the electronic device provided in this embodiment comprising: a memory 111 and a processor 112, the memory 111 being configured to store a computer program; and the processor 112 being configured to when calling the computer program, perform the video super-resolution method provided in the above embodiment.

Based on the same inventive concept, an embodiment of the present disclosure further provides a computer-readable storage medium having thereon stored a computer program which, when executed by a processor, causes the computing device to implement the video super-resolution method provided in the above embodiment.

Based on the same inventive concept, an embodiment of the present disclosure further provides a computer program product, which when run on a computer, causes the computing device to implement the video super-resolution method provided in the above embodiment.

Based on the same inventive concept, an embodiment of the present disclosure further provides a computer program, comprising instructions which, when executed by a processor, cause the processor to perform the video super-resolution method provided in the above embodiment.

It should be appreciated by those skilled in the art that, the embodiments of the present disclosure may be provided as a method, system, or computer program product. Therefore, the present disclosure may take a form of an entire hardware embodiment, an entire software embodiment, or an embodiment combining software and hardware aspects. Moreover, the present disclosure may take a form of a computer program product implemented on one or more computer-usable storage media having computer-usable program code embodied therein.

The processor may be a central processing unit (CPU), or another general purpose processor, a digital signal processor (DSP), an application specific integrated circuit (ASIC), a field-programmable gate array (FPGA) or other programmable logic device, a discrete gate or transistor logic device, a discrete hardware component, etc. The general purpose processor may be a microprocessor, or the processor may also be any conventional processor, etc.

The memory may include a non-permanent memory in a computer-readable medium, such as a random access memory (RAM), and/or a non-volatile memory, such as a read-only memory (ROM) or flash memory (flash RAM). The memory is an example of the computer-readable medium.

The computer-readable medium includes permanent and non-permanent, removable and non-removable storage media. The storage medium may implement storage of information by any method or technology, and the information may be computer-readable instructions, data structures, modules of a program, or other data. Examples of the storage medium of a computer include, but are not limited to, a phase change memory (PRAM), static random access memory (SRAM), dynamic random access memory (DRAM), other type of random access memory (RAM), read-only memory (ROM), electrically erasable programmable read-only memory (EEPROM), flash memory or other memory technology, compact disc read-only memory (CD-ROM), digital versatile disks (DVD) or other optical storage, magnetic cassette, magnetic disk storage or other magnetic storage device, or any other non-transmission medium, which can be configured for storing information that can be accessed by the computing device. As defined herein, the computer-readable medium does not include transitory media such as modulated data signals and carriers.

Finally, it should be noted that: the above embodiments are only configured for illustrating the technical solutions of the present disclosure, and not for limiting the same; although the detailed description of the present disclosure has been made with reference to the foregoing embodiments, one of ordinary skill in the art should understand that: the technical solutions described in the foregoing embodiments may still be modified, or some or all of the technical features thereof may be equivalently substituted; and these modifications or substitutions do not make the essence of the corresponding technical solutions depart from the scope of the technical solutions of the embodiments of the present disclosure.

## Claims

1. A video super-resolution method, comprising:
decomposing a t-th image frame of a video to be super-resolved and a neighborhood image frame of the t-th image frame, into N image blocks, respectively, both t and N being positive integers;
generating N image block sequences according to the image blocks obtained by decomposing the t-th image frame and the neighborhood image frame, image blocks in the image block sequence being located at same positions of different image frames, respectively;
calculating motion parameters of the image block sequences, motion parameters of any image block sequence being configured for representing optical flows between image blocks of adjacent image frames in the image block sequence;
determining super-resolution network models corresponding to the image block sequences according to the motion parameters of the image block sequences;
performing super-resolution on the image blocks of the t-th image frame in the image block sequences by using the super-resolution network models corresponding to the image block sequences, to obtain super-resolution image blocks of the t-th image frame; and
generating a super-resolution image frame of the t-th image frame according to the super-resolution image blocks of the t-th image frame.

2. The video super-resolution method according to claim 1, wherein the calculating motion parameters of the image block sequences, comprises:
calculating, for each image block sequence, the optical flows between the image blocks of the adjacent image frames in the image block sequence;
calculating, for an optical flow between image blocks of each pair of adjacent image frames, an average value of absolute values of optical flows corresponding to pixels, to obtain a motion parameter between the image blocks of the adjacent image frames; and
obtaining the motion parameters of the image block sequence according to the motion parameters between the image blocks of the adjacent image frames in the image block sequence.

3. The video super-resolution method according to claim 1 or 2, wherein the neighborhood image frame of the t-th image frame comprises:
a (t-2)-th image frame, a (t-1)-th image frame, a (t+1)-th image frame and a (t+2)-th image frame.

4. The video super-resolution method according to claim 3, wherein the determining super-resolution network models corresponding to the image block sequences according to the motion parameters of the image block sequences, comprises:
determining, for each image block sequence, whether a first motion parameter and a second motion parameter of the image block sequence are both less than a preset threshold, the first motion parameter being a motion parameter between the image block of the t-th image frame and the image block of the (t-1)-th image frame, and the second motion parameter being a motion parameter between the image block of the t-th image frame and the image block of the (t+1)-th image frame;
determining that the super-resolution network model corresponding to the image block sequence is a first super-resolution network model in response to the first motion parameter and the second motion parameter being both less than the preset threshold;
determining whether a third motion parameter and a fourth motion parameter of the image block sequence are both less than the preset threshold in response to the first motion parameter and/or the second motion parameter being greater than or equal to the preset threshold, the third motion parameter being a motion parameter between the image block of the (t-2)-th image frame and the image block of the (t-1)-th image frame, and the fourth motion parameter being a motion parameter between the image block of the (t+1)-th image frame and the image block of the (t+2)-th image frame;
determining that the super-resolution network model corresponding to the image block sequence is a second super-resolution network model in response to the third motion parameter and the fourth motion parameter being both less than the preset threshold; and
determining that the super-resolution network model corresponding to the image block sequence is a third super-resolution network model in response to the third motion parameter and/or the fourth motion parameter being greater than or equal to the preset threshold.

5. The video super-resolution method according to claim 4, wherein:
the first super-resolution network model is a single-frame super-resolution network model;
the second super-resolution network model is configured for performing super-resolution on the image block of the t-th image frame based on the image block of the (t-1)-th image frame, the image block of the t-th image frame and the image block of the (t+1)-th image frame;
the third super-resolution network model is configured for performing super-resolution on the image block of the t-th image frame based on all the image blocks in the image block sequence.

6. The video super-resolution method according to claim 5, wherein the performing, by the first super-resolution network model, super-resolution on the image block of the t-th image frame, comprises:
processing, by a pyramid cascading and deformable convolutions PCD alignment module, the image block of the t-th image frame to obtain a first feature;
processing, by a feature fusion module, the first feature to obtain a second feature, the second feature being a feature obtained by stitching a plurality of the first features in a channel dimension;
reconstructing, by a reconstruction module, the second feature to obtain a first image block; and
upsampling, by an upsampling module, the first image block to obtain a super-resolution image block corresponding to the image block of the t-th image frame.

7. The video super-resolution method according to claim 6, wherein the second feature is a feature obtained by stitching five first features in a channel dimension.

8. The video super-resolution methods according to any of claims 5-7, wherein the performing, by the second super-resolution network model, super-resolution on the image block of the t-th image frame, comprises:
processing, by a PCD alignment module, the image block of the (t-1)-th image frame, the image block of the t-th image frame, and the image block of the (t+1)-th image frame to obtain a third feature, the third feature being a feature obtained by stitching a fourth feature, a fifth feature and a sixth feature in a channel dimension, the fourth feature being a feature obtained by processing, by the PCD alignment module, the image block of the (t-1)-th image frame and the image block of the t-th image frame, the fifth feature being a feature obtained by processing, by the PCD alignment module, the image block of the t-th image frame, and the sixth feature being a feature obtained by processing, by the PCD alignment module, the image block of the t-th image frame and the image block of the (t+1)-th image frame;
processing, by a feature fusion module, the third feature to obtain a seventh feature, the seventh feature being a feature obtained by stitching the fourth feature, the third feature and the fifth feature in a channel dimension;
reconstructing, by a reconstruction module, the seventh feature to obtain a second image block; and
upsampling, by an upsampling module, the second image block to obtain a super-resolution image block corresponding to the image block of the t-th image frame.

9. The video super-resolution method according to any of claims 5-8, wherein the performing, by the third super-resolution network model, super-resolution on the image block of the t-th image frame, comprises:
processing, by a PCD alignment module, all the image blocks in the image block sequence to obtain an eighth feature, the eighth feature being a feature obtained by stitching a ninth feature, a tenth feature, an eleventh feature, a twelfth feature and a thirteenth feature in a channel dimension, the ninth feature being a feature obtained by processing, by the PCD alignment module, the image block of the (t-2)-th image frame and the image block of the (t-1)-th image frame, the tenth feature being a feature obtained by processing, by the PCD alignment module, the image block of the (t-1) -th image frame and the image block of the t-th image frame, the eleventh feature being a feature obtained by processing, by the PCD alignment module, the image block of the t-th image frame, the twelfth feature being a feature obtained by processing, by the PCD alignment module, the image block of the t-th image frame and the image block of the (t+1)-th image frame, and the thirteenth feature being a feature obtained by processing, by the PCD alignment module, the image block of the (t+1)-th image frame and the image block of the (t+2)-th image frame;
processing, by a feature fusion module, the eighth feature to obtain a fourteenth feature;
reconstructing, by a reconstruction module, the fourteenth feature to obtain a third image block; and
upsampling, by an upsampling module, the third image block to obtain a super-resolution image block corresponding to the image block of the t-th image frame in the image block sequence.

10. The video super-resolution method according to any of claims **1-9,** wherein the adjacent image blocks in the image blocks obtained by decomposing the t-th image frame and the adjacent image frame have an overlapping area, and the generating a super-resolution image frame of the t-th image frame according to the super-resolution image blocks of the t-th image frame, comprises:
stitching the super-resolution image blocks of the t-th image frame to generate a stitched image; and
setting a pixel value of each pixel in an overlapping area of the super-resolution image blocks in the stitched image as an average value of pixel values of corresponding pixels in the super-resolution image blocks, to generate the super-resolution image frame of the t-th image frame.

11. The video super-resolution method according to any of claims 1-10, wherein the decomposing a t-th image frame of a video to be super-resolved into N image blocks, comprises:
by a sampling window with a size of one image block sliding from a first pixel of the t-th image frame with a preset stride, sampling positions of the t-th image frame, and taking each sampling area of the sampling window as one image block to obtain the N image blocks.

12. A video super-resolution apparatus, comprising:
an image decomposition module, configured to decompose a t-th image frame of a video to be super-resolved and a neighborhood image frame of the t-th image frame into N image blocks, respectively, t and N being both positive integers;
a sequence generation module, configured to generate N image block sequences according to the image blocks obtained by decomposing the t-th image frame and the neighborhood image frame according to the image blocks obtained by decomposing the t-th image frame and the neighborhood image frame, image blocks in the image block sequence being located at same positions of different image frames, respectively;
a parameter calculation module, configured to calculate motion parameters of the image block sequences, motion parameters of any image block sequence being configured for representing optical flows between image blocks of adjacent image frames in the image block sequence;
a model determination module, configured to determine super-resolution network models corresponding to the image block sequences according to the motion parameters of the image block sequences;
an image super-resolution module, configured to perform super-resolution on the image blocks of the t-th image frame in the image block sequences by using the super-resolution network models corresponding to the image block sequences, to obtain super-resolution image blocks of the t-th image frame; and
an image generation module, configured to generate a super-resolution image frame of the t-th image frame according to the super-resolution image blocks of the t-th image frame.

13. An electronic device, comprising:
a memory and a processor,
the memory being configured to store instructions; and
the processor being configured to, when executing the instructions, cause the electronic device to implement the video super-resolution method according to any of claims 1-11.

14. A computer-readable storage medium having thereon stored instructions which, when executed by a processor, implement the video super-resolution method according to any of claims 1-11.

15. A computer program product, which when run on a computer, causes the computer to implement the video super-resolution method according to any of claims 1-11.

## Patentansprüche

1. Video-Superauflösungsverfahren, umfassend:
Zerlegen eines t-ten Einzelbildes eines superaufzulösenden Videos und eines benachbarten Einzelbildes des t-ten Einzelbildes in jeweils N Bildblöcke, wobei sowohl t als auch N positive ganze Zahlen sind;
Erzeugen von N Bildblocksequenzen gemäß den Bildblöcken, die durch Zerlegen des t-ten Einzelbildes und des benachbarten Einzelbildes erhalten werden, wobei sich Bildblöcke in der Bildblocksequenz jeweils an denselben Positionen unterschiedlicher Einzelbilder befinden;
Berechnen von Bewegungsparametern der Bildblocksequenzen, wobei die Bewegungsparameter einer beliebigen Bildblocksequenz dafür konfiguriert sind, optische Flüsse zwischen Bildblöcken benachbarter Einzelbilder in der Bildblocksequenz darzustellen;
Bestimmen von Superauflösungsnetzwerkmodellen, die den Bildblocksequenzen gemäß den Bewegungsparametern der Bildblocksequenzen entsprechen;
Durchführen von Superauflösung an den Bildblöcken des t-ten Einzelbildes in den Bildblocksequenzen durch Verwenden der den Bildblocksequenzen entsprechenden Superauflösungsnetzwerkmodelle, um Superauflösungsbildblöcke des t-ten Einzelbildes zu erhalten; und
Erzeugen eines Superauflösungseinzelbildes des t-ten Einzelbildes gemäß den Superauflösungsbildblöcken des t-ten Einzelbildes.

2. Video-Superauflösungsverfahren nach Anspruch 1, wobei das Berechnen von Bewegungsparametern der Bildblocksequenzen Folgendes umfasst:
Berechnen, für jede Bildblocksequenz, der optischen Flüsse zwischen den Bildblöcken der benachbarten Einzelbilder in der Bildblocksequenz;
Berechnen, für einen optischen Fluss zwischen Bildblöcken jedes Paares von benachbarten Einzelbildern, eines Mittelwerts von Absolutwerten optischer, die Pixeln entsprechen, um einen Bewegungsparameter zwischen den Bildblöcken der benachbarten Einzelbilder zu erhalten; und
Erhalten der Bewegungsparameter der Bildblocksequenz gemäß den Bewegungsparametern zwischen den Bildblöcken der benachbarten Einzelbilder in der Bildblocksequenz.

3. Video-Superauflösungsverfahren nach Anspruch 1 oder 2, wobei das benachbarte Einzelbild des t-ten Einzelbildes Folgendes umfasst:
ein (t-2)-tes Einzelbild, ein (t-1)-tes Einzelbild, ein (t+1)-tes Einzelbild und ein (t+2)-tes Einzelbild.

4. Video-Superauflösungsverfahren nach Anspruch 3, wobei das Bestimmen von Superauflösungsnetzwerkmodellen, die den Bildblocksequenzen gemäß den Bewegungsparametern der Bildblocksequenzen entsprechen, Folgendes umfasst:
Feststellen, für jede Bildblocksequenz, ob ein erster Bewegungsparameter und ein zweiter Bewegungsparameter der Bildblocksequenz beide geringer als ein voreingestellter Schwellenwert sind, wobei der erste Bewegungsparameter ein Bewegungsparameter zwischen dem Bildblock des t-ten Einzelbildes und dem Bildblock des (t-1)-ten Einzelbildes ist und der zweite Bewegungsparameter ist ein Bewegungsparameter zwischen dem Bildblock des t-ten Einzelbildes und dem Bildblock des (t+1)-ten Einzelbildes ist;
Feststellen, dass das der Bildblocksequenz entsprechende Superauflösungsnetzwerkmodell ein erstes Superauflösungsnetzwerkmodell ist, wenn der erste Bewegungsparameter und der zweite Bewegungsparameter beide kleiner als der voreingestellte Schwellenwert sind;
Feststellen, ob ein dritter Bewegungsparameter und ein vierter Bewegungsparameter der Bildblocksequenz beide geringer als der voreingestellte Schwellenwert sind, als Reaktion darauf, dass der erste Bewegungsparameter und/oder der zweite Bewegungsparameter größer als oder so groß wie der voreingestellte Schwellenwert sind, wobei der dritte Bewegungsparameter ein Bewegungsparameter zwischen dem Bildblock des (t-2)-ten Einzelbildes und dem Bildblock des (t-1)-ten Einzelbildes ist und der vierte Bewegungsparameter ein Bewegungsparameter zwischen dem Bildblock des (t+1)-ten Einzelbildes und dem Bildblock des (t+2)-ten Einzelbildes ist;
Feststellen, dass das der Bildblocksequenz entsprechende Superauflösungsnetzwerkmodell ein zweites Superauflösungsnetzwerkmodell ist, als Reaktion darauf, dass der dritte Bewegungsparameter und der vierte Bewegungsparameter beide geringer als der voreingestellte Schwellenwert sind; und
Feststellen, dass das der Bildblocksequenz entsprechende Superauflösungsnetzwerkmodell ein drittes Superauflösungsnetzwerkmodell ist, als Reaktion darauf, dass der dritte Bewegungsparameter und/oder der vierte Bewegungsparameter größer als oder so groß wie der voreingestellte Schwellenwert sind.

5. Video-Superauflösungsverfahren nach Anspruch 4, wobei:
das erste Superauflösungsnetzwerkmodell ein Einzelbild-Superauflösungsnetzwerkmodell ist;
das zweite Superauflösungsnetzwerkmodell konfiguriert ist zum Durchführen von Superauflösung an dem Bildblock des t-ten Einzelbildes auf Grundlage des Bildblocks des (t-1)-ten Einzelbildes, des Bildblocks des t-ten Einzelbildes und des Bildblocks des (t+1)-ten Einzelbildes;
das dritte Superauflösungsnetzwerkmodell konfiguriert ist zum Durchführen von Superauflösung an dem Bildblock des t-ten Einzelbildes auf Grundlage aller Bildblöcke in der Bildblocksequenz.

6. Video-Superauflösungsverfahren nach Anspruch 5, wobei das Durchführen, durch das erste Superauflösungsnetzwerkmodell, von Superauflösung an dem Bildblock des t-ten Einzelbildes Folgendes umfasst:
Verarbeiten, durch ein Pyramidenkaskadierungs- und PCD-Ausrichtungsmodul für verformbare Faltungen, des Bildblocks des t-ten Einzelbildes, um ein erstes Merkmal zu erhalten;
Verarbeiten, durch ein Merkmalsfusionsmodul, des ersten Merkmals, um ein zweites Merkmal zu erhalten, wobei das zweite Merkmal ein Merkmal ist, das durch Zusammenfügen einer Vielzahl der ersten Merkmale in einer Kanaldimension erhalten wird;
Rekonstruieren, durch ein Rekonstruktionsmodul, des zweiten Merkmals, um einen ersten Bildblock zu erhalten; und
Upsampling, durch ein Upsampling-Modul, des ersten Bildblocks, um einen Superauflösungsbildblock zu erhalten, der dem Bildblock des t-ten Einzelbildes entspricht.

7. Video-Superauflösungsverfahren nach Anspruch 6, wobei das zweite Merkmal ein Merkmal ist, das durch Zusammenfügen von fünf ersten Merkmalen in einer Kanaldimension erhalten wird.

8. Video-Superauflösungsverfahren nach einem der Ansprüche 5-7, wobei das Durchführen, durch das zweite Superauflösungsnetzwerkmodell von Superauflösung an dem Bildblock des t-ten Einzelbildes Folgendes umfasst:
Verarbeiten, durch ein PCD-Ausrichtungsmodul, des Bildblocks des (t-1)-ten Einzelbildes, des Bildblocks des t-ten Einzelbildes und des Bildblocks des (t+1)-ten Einzelbildes, um ein drittes Merkmal zu erhalten, wobei das dritte Merkmal durch Zusammenfügen eines vierten Merkmals, eines fünften Merkmals und eines sechsten Merkmals in einer Kanaldimension erhalten wird, das vierte Merkmal ein Merkmal ist, das durch Verarbeiten, durch das PCD-Ausrichtungsmodul, des Bildblocks des (t-1)-ten Einzelbildes und des Bildblocks des t-ten Einzelbildes erhalten wird, das fünfte Merkmal ein Merkmal ist, das durch Verarbeiten, durch das PCD-Ausrichtungsmodul, des Bildblocks des t-ten Einzelbildes erhalten wird, und das sechste Merkmal ein Merkmal ist, das durch Verarbeiten, durch das PCD-Ausrichtungsmodul, des Bildblocks des t-ten Einzelbildes und des Bildblocks des (t+1)-ten Einzelbildes erhalten wird;
Verarbeiten, durch ein Merkmalsfusionsmodul, des dritten Merkmals, um ein siebtes Merkmal zu erhalten, wobei das siebte Merkmal ein Merkmal ist, das durch Zusammenfügen des vierten Merkmals, des dritten Merkmals und des fünften Merkmals in einer Kanaldimension erhalten wird;
Rekonstruieren, durch ein Rekonstruktionsmodul, des siebten Merkmals, um einen zweiten Bildblock zu erhalten; und
Upsampling, durch ein Upsampling-Modul, des zweiten Bildblocks, um einen Superauflösungsbildblock zu erhalten, der dem Bildblock des t-ten Einzelbildes entspricht.

9. Video-Superauflösungsverfahren nach einem der Ansprüche 5-8, wobei das Durchführen, durch das dritte Superauflösungsnetzwerkmodell von Superauflösung an dem Bildblocks des t-ten Einzelbildes Folgendes umfasst:
Verarbeiten, durch ein PCD-Ausrichtungsmodul, aller Bildblöcke in der Bildsequenz, um ein achtes Merkmal zu erhalten, wobei das achte Merkmal ein Merkmal ist, das durch Zusammenfügen eines neunten Merkmals, eines zehnten Merkmals, eines elften Merkmals, eines zwölften Merkmals und eines dreizehnten Merkmals in einer Kanaldimension erhalten wird, das neunte Merkmal ein Merkmal ist, das durch Verarbeiten, durch das PCD-Ausrichtungsmodul, des Bildblocks des (t-2)-ten Einzelbildes und des Bildblocks des (t-1)-ten Einzelbildes erhalten wird, das zehnte Merkmal ein Merkmal ist, das durch Verarbeiten, durch das PCD-Ausrichtungsmodul, des Bildblocks des (t-1)-ten Einzelbildes und des Bildblocks des t-ten Einzelbildes erhalten wird, das elfte Merkmal ein Merkmal ist, das durch Verarbeiten, durch das PCD-Ausrichtungsmodul, des Bildblocks des t-ten Einzelbildes erhalten wird, das zwölfte Merkmal ein Merkmal ist, das durch Verarbeiten, durch das PCD-Ausrichtungsmodul, des Bildblocks des t-ten Einzelbildes und des Bildblocks des (t+1)-ten Einzelbildes erhalten wird, und das dreizehnte Merkmal ein Merkmal ist, das durch Verarbeiten, durch das PCD-Ausrichtungsmodul, des Bildblocks des (t+1)-ten Einzelbildes und Bildblock des (t+2)-ten Einzelbildes erhalten wird;
Verarbeiten, durch ein Merkmalsfusionsmodul, des achten Merkmals, um ein vierzehntes Merkmal zu erhalten;
Rekonstruieren, durch ein Rekonstruktionsmodul, des vierzehnten Merkmals, um einen dritten Bildblock zu erhalten; und
Upsampling, durch ein Upsampling-Modul, des dritten Bildblocks, um einen Superauflösungsbildblock zu erhalten, der dem Bildblock des t-ten Einzelbildes in der Bildblocksequenz entspricht.

10. Video-Superauflösungsverfahren nach einem der Ansprüche 1-9, wobei die benachbarten Bildblöcke in den durch Zerlegen des t-ten Einzelbildes und des benachbarten Einzelbildes erhaltenen Bildblöcken einen Überlappungsbereich aufweisen und das Erzeugen eines Superauflösungsbildes des t-ten Einzelbildes gemäß den Superauflösungsbildblöcken des t-ten Einzelbildes Folgendes umfasst:
Zusammenfügen der Superauflösungsbildblöcke des t-ten Einzelbildes, um ein zusammengefügtes Bild zu erzeugen; und
Festsetzen eines Pixelwertes jedes Pixels in einem Überlappungsbereich der Superauflösungsbildblöcke im zusammengefügten Bild als einen Mittelwert von Pixelwerten entsprechender Pixel in den Superauflösungsbildblöcken, um das Superauflösungseinzelbild des t-ten Einzelbildes zu erzeugen.

11. Video-Superauflösungsverfahren nach einem der Ansprüche 1-10, wobei das Zerlegen eines t-ten Einzelbildes eines superaufzulösenden Videos in N Bildblöcke Folgendes umfasst:
durch ein Abtastfenster mit einer Größe eines Bildblocks, das von einem ersten Pixel des t-ten Einzelbildes mit einer voreingestellten Schrittweite gleitet, Abtasten von Positionen des t-ten Einzelbildes und Nehmen jedes Abtastbereichs des Abtastfensters als einen Bildblock, um die N Bildblöcke zu erhalten.

12. Video-Superauflösungseinrichtung, umfassend:
ein Bildzerlegungsmodul, das dafür konfiguriert ist, ein t-tes Einzelbild eines superaufzulösenden Videos und ein benachbartes Einzelbild des t-ten Einzelbildes jeweils in N Bildblöcke zu zerlegen, wobei t und N positive ganze Zahlen sind;
ein Sequenzerzeugungsmodul, das dafür konfiguriert ist, N Bildblocksequenzen gemäß den Bildblöcken zu erzeugen, die durch Zerlegen des t-ten Einzelbildes und des benachbarten Einzelbildes erhalten werden, wobei sich Bildblöcke in der Bildblocksequenz jeweils an denselben Positionen unterschiedlicher Einzelbilder befinden;
ein Parameterberechnungsmodul, das dafür konfiguriert ist, Bewegungsparameter der Bildblocksequenzen zu berechnen, wobei Bewegungsparameter einer beliebigen Bildblocksequenz dafür konfiguriert sind, optische Flüsse zwischen Bildblöcken benachbarter Einzelbilder in der Bildblocksequenz darzustellen;
ein Modellbestimmungsmodul, das dafür konfiguriert ist, gemäß den Bewegungsparametern der Bildblocksequenzen Superauflösungsnetzwerkmodelle zu bestimmen, die den Bildblocksequenzen entsprechen;
ein Bild-Superauflösungsmodul, das dafür konfiguriert ist, Superauflösung an den Bildblöcken des t-ten Einzelbildes in den Bildblocksequenzen durch Verwenden der den Bildblocksequenzen entsprechenden Superauflösungsnetzwerkmodelle durchzuführen, um Superauflösungsbildblöcke des t-ten Einzelbildes zu erhalten; und
ein Bilderzeugungsmodul, das dafür konfiguriert ist, ein Superauflösungseinzelbild des t-ten Einzelbildes gemäß den Superauflösungsbildblöcken des t-ten Einzelbildes zu erzeugen.

13. Elektronische Vorrichtung, umfassend:
einen Speicher und einen Prozessor,
wobei der Speicher dafür konfiguriert ist, Anweisungen zu speichern; und
der Prozessor dafür konfiguriert ist, wenn er die Anweisungen ausführt, die elektronische Vorrichtung zu veranlassen, das Video-Superauflösungsverfahren nach einem der Ansprüche 1-11 durchzuführen.

14. Computerlesbares Speichermedium, das auf demselben Anweisungen gespeichert hat, die, wenn sie von einem Prozessor ausgeführt werden, das Video-Superauflösungsverfahren nach einem der Ansprüche 1-11 umsetzen.

15. Computerprogrammprodukt, das, wenn es auf einem Computer laufen gelassen wird, den Computer veranlasst, das Video-Superauflösungsverfahren nach einem der Ansprüche 1-11 umzusetzen.

## Revendications

1. Procédé de super-résolution vidéo, comprenant les étapes consistant à :
décomposer une t-ième trame d'image d'une vidéo devant faire l'objet d'une super-résolution et une trame image voisine de la t-ième trame d'image, respectivement en N blocs d'image, t et N étant tous deux des entiers positifs ;
générer N séquences de blocs d'image selon les blocs d'image obtenus en décomposant la t-ième trame d'image et la trame d'image voisine, des blocs d'image dans la séquence de blocs d'image étant situés aux mêmes positions de différentes trames d'image, respectivement ;
calculer des paramètres de mouvement des séquences de blocs d'image, des paramètres de mouvement de toute séquence de blocs d'image étant configurés pour représenter des flux optiques entre des blocs d'image de trames d'image adjacentes dans la séquence de blocs d'image ;
déterminer des modèles de réseau à super-résolution correspondant aux séquences de blocs d'image en fonction des paramètres de mouvement des séquences de blocs d'image ;
réaliser une super-résolution sur les blocs d'image de la t-ième trame d'image dans les séquences de blocs d'image en utilisant les modèles de réseau à super-résolution correspondant aux séquences de blocs d'image, afin d'obtenir des blocs d'image à super-résolution de la t-ième trame d'image ; et
générer une trame d'image à super-résolution de la t-ième trame d'image en fonction des blocs d'image à super-résolution de la t-ième trame d'image.

2. Procédé de super-résolution vidéo selon la revendication 1, dans lequel le calcul de paramètres de mouvement des séquences de blocs d'image comprend les étapes consistant à :
calculer, pour chaque séquence de blocs d'image, les flux optiques entre les blocs d'image des trames d'image adjacentes dans la séquence de blocs d'image ;
calculer, pour un flux optique entre des blocs d'image de chaque paire de trames d'image adjacentes, une valeur moyenne de valeurs absolues de flux optiques correspondant à des pixels, afin d'obtenir un paramètre de mouvement entre les blocs d'image des trames d'image adjacentes ; et
obtenir des paramètres de mouvement de la séquence de blocs d'image en fonction des paramètres de mouvement entre les blocs d'image des trames d'image adjacentes dans la séquence de blocs d'image.

3. Procédé de super-résolution vidéo selon la revendication 1 ou 2, dans lequel la trame d'image voisine de la t-ième trame d'image comprend :
une (t-2)-ième trame d'image, une (t-1)-ième trame d'image, une (t+1)-ième trame d'image et une (t+2)-ième trame d'image.

4. Procédé de super-résolution vidéo selon la revendication 3, dans lequel la détermination des modèles de réseau à super-résolution correspondant aux séquences de blocs d'image en fonction des paramètres de mouvement des séquences de blocs d'image comprend les étapes consistant à :
déterminer, pour chaque séquence de blocs d'image, si un premier paramètre de mouvement et un deuxième paramètre de mouvement sont tous deux inférieurs à un seuil prédéfini, le premier paramètre de mouvement étant un paramètre de mouvement entre le bloc d'image de la t-ième trame d'image et le bloc d'image de la (t-1)-ième trame d'image, et le deuxième paramètre de mouvement étant un paramètre de mouvement entre le bloc d'image de la t-ième trame d'image et le bloc d'image de la (t+1)-ième trame d'image ;
déterminer que le modèle de réseau à super-résolution correspondant à la séquence de blocs d'image est un premier modèle de réseau à super-résolution en réponse au fait que le premier paramètre de mouvement et le deuxième paramètre de mouvement sont tous deux inférieurs au seuil prédéfini ;
déterminer si un troisième paramètre de mouvement et un quatrième paramètre de mouvement de la séquence de blocs d'image sont tous deux inférieurs au seuil prédéfini en réponse au fait que le premier paramètre de mouvement et/ou le deuxième paramètre de mouvement sont supérieurs ou égaux au seuil prédéfini, le troisième paramètre de mouvement étant un paramètre de mouvement entre le bloc d'image de la (t-2)-ième trame d'image et le bloc d'image de la (t-1)-ième trame d'image, et le quatrième paramètre de mouvement étant un paramètre de mouvement entre le bloc d'image de la (t+1)-ième trame d'image et le bloc d'image de (t+2)-ième trame d'image ;
déterminer que le modèle de réseau à super-résolution correspondant à la séquence de blocs d'image est un deuxième modèle de réseau à super-résolution en réponse au fait que le troisième paramètre de mouvement et le quatrième paramètre de mouvement sont tous deux inférieurs au seuil prédéfini ; et
déterminer que le modèle de réseau à super-résolution correspondant à la séquence de blocs d'image est un troisième modèle de réseau à super-résolution en réponse au fait que le troisième paramètre de mouvement et/ou le quatrième paramètre de mouvement sont supérieurs ou égaux au seuil prédéfini.

5. Procédé de super-résolution vidéo selon la revendication 4, dans lequel :
le premier modèle de réseau à super-résolution est un modèle de réseau à super-résolution à trame unique ;
le deuxième modèle de réseau à super-résolution est configuré pour réaliser une super-résolution sur le bloc d'image de la t-ième trame d'image, sur la base du bloc d'image de la (t-1)-ième trame d'image, du bloc d'image de la t-ième trame d'image et du bloc d'image de la (t+1)-ième trame d'image ;
le troisième modèle de réseau à super-résolution est configuré pour réaliser une super-résolution sur le bloc d'image de la t-ième trame d'image sur la base de tous les blocs d'image dans la séquence de blocs d'image.

6. Procédé de super-résolution vidéo selon la revendication 5, dans lequel la réalisation, par le premier modèle de réseau à super-résolution, d'une super-résolution sur le bloc d'image de la t-ième trame d'image, comprend les étapes consistant à :
traiter, par l'intermédiaire d'un module d'alignement PCD à convolutions déformables et cascade de pyramides, du bloc d'image de la t-ième trame d'image pour obtenir une première caractéristique ;
traiter, par l'intermédiaire d'un module de fusion de caractéristiques, la première caractéristique pour obtenir une deuxième caractéristique, la deuxième caractéristique étant une caractéristique obtenue en assemblant une pluralité des premières caractéristiques dans une dimension de canal ;
reconstruire, par l'intermédiaire d'un module de reconstruction, la seconde caractéristique pour obtenir un premier bloc d'image ; et
suréchantillonner, par l'intermédiaire d'un module de suréchantillonnage, le premier bloc d'image pour obtenir un bloc d'image à super-résolution correspondant au bloc d'image de la t-ième trame d'image.

7. Procédé de super-résolution vidéo selon la revendication 6, dans lequel la seconde caractéristique est une caractéristique obtenue en assemblant cinq premières caractéristiques dans une dimension de canal.

8. Procédés de super-résolution vidéo selon l'une quelconque des revendications 5 à 7, dans lesquels la réalisation, par le deuxième modèle de réseau à super-résolution, d'une super-résolution sur le bloc d'image de la t-ième trame d'image, comprend les étapes consistant à :
traiter, par l'intermédiaire d'un module d'alignement PCD, du bloc d'image de la (t-1)-ième trame d'image, du bloc d'image de la t-ième trame d'image et du bloc d'image de la (t+1)-ième trame d'image pour obtenir une troisième caractéristique, la troisième caractéristique étant obtenue en assemblant une quatrième, une cinquième et une sixième caractéristique dans une dimension de canal, la quatrième caractéristique est obtenue en traitant, par l'intermédiaire du module d'alignement PCD, le bloc d'image de la (t-1)-ième trame d'image et le bloc d'image de la t-ième trame d'image, la cinquième caractéristique étant une caractéristique obtenue en traitant, par l'intermédiaire du module d'alignement PCD, le bloc d'image de la t-ième trame d'image, et la sixième caractéristique étant une caractéristique obtenue en traitant, par l'intermédiaire du module d'alignement PCD, le bloc d'image de la t-ième trame d'image et le bloc d'image de la (t+1)-ième trame d'image ;
traiter, par l'intermédiaire d'un module de fusion de caractéristiques, la troisième caractéristique pour obtenir une septième caractéristique, la septième caractéristique étant une caractéristique obtenue en assemblant la quatrième caractéristique, la troisième caractéristique et la cinquième caractéristique dans une dimension de canal ;
reconstruire, par l'intermédiaire d'un module de reconstruction, la septième caractéristique pour obtenir un deuxième bloc d'image ; et
suréchantillonner, par l'intermédiaire d'un module de suréchantillonnage, le deuxième bloc d'image pour obtenir un bloc d'image à super-résolution correspondant au bloc d'image de la t-ième trame d'image.

9. Procédé de super-résolution vidéo selon l'une quelconque des revendications 5-8, dans lequel la réalisation, par le troisième modèle de réseau à super-résolution, d'une super-résolution sur le bloc d'image de la t-ième trame d'image, comprend les étapes consistant à :
traiter, par l'intermédiaire d'un module d'alignement PCD, tous les blocs d'image dans la séquence de blocs d'image pour obtenir une huitième caractéristique, la huitième caractéristique étant une caractéristique obtenue en assemblant une neuvième caractéristique, une dixième caractéristique, une onzième caractéristique, une douzième caractéristique et une treizième caractéristique dans une dimension de canal, la neuvième caractéristique étant une caractéristique obtenue en traitant, par l'intermédiaire du module d'alignement PCD, le bloc d'image de la (t-2)-ième trame d'image et le bloc d'image de la (t-1)-ième trame d'image, la dixième caractéristique étant une caractéristique obtenue en traitant, par l'intermédiaire du module d'alignement PCD, le bloc d'image de la (t-1)-ième trame d'image et le bloc d'image de la t-ième trame d'image, la onzième caractéristique étant une caractéristique obtenue en traitant, par l'intermédiaire du module d'alignement PCD, le bloc d'image de la t-ième trame d'image, la douzième caractéristique étant une caractéristique obtenue en traitant, par l'intermédiaire du module d'alignement PCD, le bloc d'image de la t-ième trame d'image et le bloc d'image de la (t+1)-ième trame d'image, et la treizième caractéristique étant une caractéristique obtenue en traitant, par l'intermédiaire du module d'alignement PCD, le bloc d'image de la (t+1)-ième trame d'image et le bloc d'image de la (t+2)-ième trame d'image ;
traiter, par l'intermédiaire d'un module de fusion de caractéristiques, la huitième caractéristique pour obtenir une quatorzième caractéristique ;
reconstruire, par l'intermédiaire d'un module de reconstruction, la quatorzième caractéristique pour obtenir un troisième bloc d'image ; et
suréchantillonner, par l'intermédiaire d'un module de suréchantillonnage, le troisième bloc d'image pour obtenir un bloc d'image à super-résolution correspondant au bloc d'image de la t-ième trame d'image dans la séquence de blocs d'image.

10. Procédé de super-résolution vidéo selon l'une quelconque des revendications 1-9, dans lequel les blocs d'image adjacents dans les blocs d'image obtenus en décomposant la t-ième trame d'image et la trame d'image adjacente présentent une zone de chevauchement, et la génération d'une trame d'image à super-résolution de la t-ième trame d'image en fonction des blocs d'image à super-résolution de la t-ième trame d'image comprend les étapes consistant à :
assembler les blocs d'image à super-résolution de la t-ième trame d'image pour générer une image assemblée ; et
définir une valeur de pixel de chaque pixel dans une zone de chevauchement des blocs d'image à super-résolution dans l'image assemblée comme une valeur moyenne des valeurs de pixel de pixels correspondants dans les blocs d'image à super-résolution, afin de générer la trame d'image à super-résolution de la t-ième trame d'image.

11. Procédé de super-résolution vidéo selon l'une quelconque des revendications 1-10, dans lequel la décomposition d'une t-ième trame d'image d'une vidéo devant faire l'objet d'une super-résolution en N blocs d'image comprend l'étape consistant à :
par l'intermédiaire d'une fenêtre d'échantillonnage d'une taille d'un bloc d'image glissant à partir d'un premier pixel de la t-ième trame d'image avec un pas prédéfini, échantillonner des positions de la t-ième trame d'image et prendre chaque zone d'échantillonnage de la fenêtre d'échantillonnage comme un bloc d'image pour obtenir les N blocs d'image.

12. Appareil de super-résolution vidéo, comprenant :
un module de décomposition d'image, configuré pour décomposer une t-ième trame d'image d'une vidéo devant faire l'objet d'une super-résolution et une trame image voisine de la t-ième trame d'image, respectivement en N blocs d'image, t et N étant tous deux des entiers positifs ;
un module de génération de séquence, configuré pour générer N séquences de blocs d'image en fonction des blocs d'image obtenus en décomposant la t-ième trame d'image et la trame d'image voisine en fonction des blocs d'image obtenus en décomposant la t-ième trame d'image et la trame d'image voisine, des blocs d'image dans la séquence de blocs d'image étant situés aux mêmes positions de différentes trames d'image, respectivement ;
un module de calcul de paramètre, configuré pour calculer des paramètres de mouvement des séquences de blocs d'image, des paramètres de mouvement de toute séquence de blocs d'image étant configurés pour représenter des flux optiques entre des blocs d'image de trames d'image adjacentes dans la séquence de blocs d'image ;
un module de détermination de modèle, configuré pour déterminer des modèles de réseau à super-résolution correspondant aux séquences de blocs d'image en fonction des paramètres de mouvement des séquences de blocs d'image ;
un module de super-résolution d'image, configuré pour réaliser une super-résolution sur les blocs d'image de la t-ième trame d'image dans les séquences de blocs d'image en utilisant les modèles de réseau à super-résolution correspondant aux séquences de blocs d'image, afin d'obtenir des blocs d'image à super-résolution de la t-ième trame d'image ; et
un module de génération d'image, configuré pour générer une trame d'image à super-résolution de la t-ième trame d'image en fonction des blocs d'image à super-résolution de la t-ième trame d'image.

13. Dispositif électronique, comprenant :
une mémoire et un processeur,
la mémoire étant configurée pour stocker des instructions ; et
le processeur étant configuré pour, lors de l'exécution des instructions, amener le dispositif électronique à mettre en œuvre le procédé de super-résolution vidéo selon l'une quelconque des revendications 1-11.

14. Support de stockage lisible par ordinateur présentant des instructions stockées sur celui-ci qui, lorsqu'elles sont exécutées par un processeur, mettent en œuvre le procédé de super-résolution vidéo selon l'une quelconque des revendications 1-11.

15. Produit de programme informatique qui, lorsqu'il tourne sur un ordinateur, amène l'ordinateur à mettre en œuvre le procédé de super-résolution vidéo selon l'une quelconque des revendications 1-11.
